# EUROPÄISCHE PATENTANMELDUNG

(11) **EP 2 128 590 A1**
(43) Veröffentlichungstag der Anmeldung: **02.12.2009**
(21) Anmeldenummer: 09161343.0
(22) Anmeldetag: 28.05.2009
(51) Int. Cl.: G01M 11/06

(54) **Verfahren und Vorrichtung zur Kalibrierung einer durch einen Frontscheinwerfer eines Fahrzeugs erzeugten horizontalen Hell-Dunkel-Grenze**

(30) Priorität: 28.05.2008 DE 102008025458
(71) Anmelder: Hella KGaA Hueck & Co., 59552 Lippstadt (DE)
(72) Erfinder: Staffen, René, 13089, Berlin (DE)
(74) Vertreter: Schaumburg, Thoenes, Thurn, Landskron, Eckert

(57) **Zusammenfassung**

Die Erfindung betrifft ein Verfahren und eine Vorrichtung zum Kalibrieren mindestens einer durch mindestens einen Frontscheinwerfer eines Fahrzeugs erzeugten horizontalen Hell-Dunkel-Grenze. Es wird mindestens ein Bild mit einer Abbildung eines Bereichs vor dem Fahrzeug (10) erfasst. Bei der Verarbeitung der Bilddaten des erfassten Bildes wird mindestens eine Position mindestens einer durch mindestens einen Frontscheinwerfer (18) des Fahrzeugs (10) erzeugten horizontalen Hell-Dunkel-Grenze (20) als Ist-Position ermittelt. Bei einer Abweichung der Ist-Position von einer voreingestellten Soll-Position wird mindestens ein Korrekturwert gebildet.

## Beschreibung

Die Erfindung betrifft ein Verfahren und eine Vorrichtung zur Kalibrierung mindestens einer durch mindestens einen Frontscheinwerfer eines Fahrzeugs erzeugten horizontalen Hell-Dunkel-Grenze. Es sind Frontscheinwerfer bekannt, die eine voreinstellbare horizontale Hell-Dunkel-Grenze erzeugten können. Die horizontale Hell-Dunkel-Grenze kann bei solchen Frontscheinwerfern beispielsweise durch ein System zur Leuchtweitenregulierung gezielt verändert und eingestellt werden. Dazu ist es erforderlich, dass die durch den Frontscheinwerfer des Fahrzeugs erzeugbare horizontale Hell-Dunkel-Grenze exakt positioniert werden kann, um eine Blendung anderer Verkehrsteilnehmer zu vermeiden und eine optimale Ausleuchtung des Bereichs vor dem Fahrzeug zu erreichen. Zum exakten Positionieren muss die horizontale Hell-Dunkel-Grenze exakt kalibriert sein, vorzugsweise in Bezug auf ein Fahrzeugkoordinatensystem und/oder auf ein Bilderfassungssystem exakt kalibriert sein.

Aus dem Dokument EP 1 437 259 B1 sind eine Vorrichtung und ein Verfahren zur Einstellung der Neigung eines Frontscheinwerfers bekannt um die Höhenausrichtung eines Kraftfahrzeugscheinwerfers mit Hilfe eines beweglichen Reflektors einzustellen. Dabei wird mit Hilfe einer Einrichtung ein spezifischer Lichtpunkt ausgesendet, der mit Hilfe einer am Fahrzeug angebrachten Kamera erfasst wird.

Dabei ist es vorteilhaft, die horizontale Hell-Dunkel-Grenze anzuheben, dass der Bereich vor dem Fahrzeug optimal ausgeleuchtet ist und dabei andere Verkehrsteilnehmer nicht behindert werden. Beispielsweise wird die horizontale Hell-Dunkel-Grenze auf die Rücklichter eines vorausfahrenden oder auf die Frontschweinwerfer eines entgegenkommenden Fahrzeugs positioniert, sodass der Bereich unterhalb der Rücklichter bzw. Frontscheinwerfer dieser Fahrzeuge ausgeleuchtet wird, wenn sich diese Fahrzeuge in einem Blendbereich befinden.

Aus dem Dokument DE 199 62 997 A1 ist ein Verfahren zur Kalibrierung eines Sensorsystems bekannt, bei dem charakteristische Daten eines Objekts erfasst werden und unter Berücksichtigung der Eigenbewegung des Fahrzeugs überprüft wird, ob diese Objekte ruhende bzw. quasi ruhende Objekte sind. Aufgrund einer ermittelten Bewegung der als ruhende Objekte erkannten Objekt unter Berücksichtigung der Eigenbewegung des Fahrzeugs wird ein Fehlervektor ermittelt, der zur Korrektur von Modelldaten herangezogen wird, um eine Minimierung der Abweichungen zu bewirken.

Aus dem Dokument DE 198 60 676 A1 ist eine Visualisierungseinrichtung mit einer Simulierung der durch wenigstens einen Scheinwerfer in einem Bereich vor einem Fahrzeug bewirkten Beleuchtung in einem Videobild bekannt.

Aus dem Dokument DE 198 27 349 A1 ist eine Vorrichtung zum Justieren eines Scheinwerfers eines Kraftfahrzeugs bekannt, durch die der Scheinwerfer auf eine vorgegebene Nulllage mittels einer kraftfahrzeugsexternen Messvorrichtung zur Erfassung der Ist-Stellung und zur Vorgabe einer Soll-Stellung des Scheinwerfers justiert wird.

Aus dem Dokument DE 197 04 427 A1 ist eine Leuchtweitenregulierungseinrichtung für ein Fahrzeug bekannt. Die Leuchtweitenregulierung erfolgt somit durch das Aussenden und Erfassen spezieller Lichtspots.

Aus dem Dokument DE 38 26 813 A1 ist ein Darstellungsverfahren zur Lichtverteilung eines zu prüfenden Scheinwerfers bekannt, bei dem eine Szene mit einer Beleuchtung durch den zu prüfenden Scheinwerfer und mit einem Vergleichsscheinwerfer aufgenommen wird.

Aus dem Dokument DE 196 02 005 A1 ist eine Vorrichtung zur automatischen Korrektur der Ausrichtung wenigstens eines Schweinwerfers eines Kraftfahrzeugs bekannt, bei dem ein Beleuchtungsstärkesensor einen durch einen Strahler auf dem Boden vor dem Fahrzeug erzeugten Lichtfleck erfasst. Durch eine Lageänderung des Fahrzeugs erfolgt eine Verschiebung des Lichtflecks. Abhängig von der Lage des Lichtflecks wird die Ausrichtung des Scheinwerfers korrigiert.

Aus dem Dokument EP 1 201 498 A1 sind eine Vorrichtung und ein Verfahren zur Einstellung der Neigung eines Fahrzeugscheinwerfers bekannt. Zur Leuchtweitenkorrektur wird ein von einer Einrichtung ausgesendeter spezifischer Lichtpunkt erfasst und der Scheinwerfer solange verstellt, bis die Position des erfassten Lichtpunktes mit einer vorgegebenen Position übereinstimmt.

Aufgabe der Erfindung ist es, ein Verfahren und eine Vorrichtung zum Kalibrieren mindestens eines Frontscheinwerfers eines Fahrzeugs anzugeben, bei dem eine durch den Frontscheinwerfer erzeugte horizontale Hell-Dunkel-Grenze auf einfache Art und Weise eingestellt werden kann.

Diese Aufgabe wird durch ein Verfahren zur Kalibrierung mindestens einer durch mindestens einen Frontscheinwerfer eines Fahrzeugs erzeugten horizontalen Hell-Dunkel-Grenze mit den Merkmalen des Patentanspruchs 1 sowie durch eine Vorrichtung mit den Merkmalen des nebengeordneten Vorrichtungsanspruchs gelöst. Vorteilhafte Weiterbildungen der Erfindung sind in den abhängigen Patentansprüchen angegeben.

Durch ein Verfahren und durch eine Vorrichtung zur Kalibrierung mindestens einer durch mindestens einen Frontscheinwerfer eines Fahrzeugs erzeugten horizontalen Hell-Dunkel-Grenze wird erreicht, dass Abweichungen einer Ist-Position der horizontalen Hell-Dunkel-Grenze von einer Soll-Position auf einfache Art und Weise ermittelt und korrigiert werden können. Dadurch werden Fehler durch nicht korrekte Kalibrierung der Frontscheinwerfer des Fahrzeugs vermieden. Ferner kann dadurch die Lichtabgabe durch die Frontscheinwerfer so erfolgten, dass die horizontale Hell-Dunkel-Grenze relativ nah an detektierte relevante Objekte, wie z. B. vorausfahrende und/oder entgegenkommende Fahrzeuge, positioniert werden kann, ohne dass die Fahrzeugführer dieser Fahrzeuge durch das von den Frontscheinwerfern abgestrahlte Licht beeinträchtigt werden. Behinderungen dieser Fahrzeugführer können somit vermieden und die Verkehrssicherheit sowohl durch die optimierte Ausleuchtung als auch durch das Vermeiden der Blendung anderer Verkehrsteilnehmer erhöht werden.

Durch das Verfahren und die Vorrichtung der unabhängigen Patentansprüche wird jeweils sichergestellt, dass die Frontscheinwerfer des Fahrzeugs und das die Frontscheinwerfer ansteuernden Fahrerassistenzsysteme optimal aufeinander abgestimmt werden können und eine nicht korrekte Einstellung der Frontscheinwerfer erkannt und durch ein Lichtassistenzsystem berücksichtigt werden können. Ferner ist es vorteilhaft, den mindestens einen Korrekturwert wiederholt zu erfassen und eine Nachverfolgung, ein sogenanntes Tracking, des Korrekturwertes durchzuführen.

Vorteilhaft ist es, das mindestens eine Bild mit Hilfe einer Bilderfassungseinheit zu erfassen und die durch die Bilderfassungseinheit erzeugten Bilddaten des Bildes eines Bereichs vor dem Fahrzeug durch eine Verarbeitungseinheit zum Ermitteln der Ist-Position der mindestens einen horizontalen Hell-Dunkel-Grenze zu verarbeiten. Als Bilderfassungseinheit eignet sich insbesondere eine bekannte Fahrzeugkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Weiterhin ist es vorteilhaft, den mindestens einen ermittelten Korrekturwert zu speichern. Dadurch kann der Korrekturwert bei einer weiteren Ansteuerung der Frontscheinwerfer berücksichtigt werden. Ferner ist es vorteilhaft, zum Kalibrieren den vertikalen Helligkeitsverlauf in einem mit Hilfe einer Bilderfassungseinheit erfassten Bildes mit einer Abbildung eines Bereichs vor dem Fahrzeug zu ermitteln. Mit Hilfe des Helligkeitsverlaufs können Anstiege und die Überschreitung von voreingestellten Grenzwerten ermittelt werden. Abhängig von den ermittelten absoluten Helligkeitswerten und/oder den Anstiegen der Helligkeitswerte in bestimmten Bereichen des Helligkeitsverlaufs kann auf einfache Art und Weise mindestens eine horizontale Hell-Dunkel-Grenze ermittelt werden.

Dabei ist es vorteilhaft, zum Ermitteln des Helligkeitsverlaufs nur Helligkeitswerte der Bilderfassungselemente zu berücksichtigen, die voreingestellten Detektionsspalten zugeordnet sind. Hierdurch wird der Rechenaufwand reduziert, wodurch eine schnellere Reaktion des Systems auf sich ändernde Bedingungen erfolgen kann. Die mit Hilfe dieser Bilderfassungselemente ermittelten Helligkeitswerte werden zeilenweise summiert bzw. aufintegriert.

Ferner ist es dabei vorteilhaft, zusätzlich Detektionszeilen vorzusehen. Dann werden vorzugsweise nur die Helligkeitswerte der Bilderfassungselemente zeilenweise summiert, die sowohl einer Detektionsspalte als auch einer Detektionszeile zugeordnet sind. Hierdurch kann der Rechenaufwand noch weiter reduziert werden.

Bei einer Weiterbildung der Erfindung wird eine Veränderung bzw. Korrektur der horizontalen Hell-Dunkel-Grenze mit Hilfe einer Veränderung der Leuchtweitenregulierungseinstellung der Frontscheinwerfer des Fahrzeugs durchgeführt. Alternativ oder zusätzlich kann eine Verstellung der horizontalen Hell-Dunkel-Grenze durch Zu- und/oder Abschalten einer oder mehrerer Lichtquellen mindestens eines Frontscheinwerfers des Fahrzeugs durchgeführt werden.

Ferner ist es bei einer Weiterbildung der Erfindung vorteilhaft, den Abstrahlwinkel der durch den mindestens einen Frontscheinwerfer des Fahrzeugs abgestrahlten Lichtstrahlen zu bestimmen, durch die die horizontale Hell-Dunkel-Grenze erzeugt werden. Dazu kann die Entfernung zwischen dem Fahrzeug und der auf die Fahrbahn vor dem Fahrzeug projizierten Hell-Dunkel-Grenze ermittelt werden. Die Entfernung der auf die Fahrbahn projizierten horizontalen Hell-Dunkel-Grenze wird vorzugsweise mit Hilfe der Entfernungsmessfunktion eines Stereokamerasystems bestimmt.

Bei einer alternativen Weiterbildung treffen zumindest ein Teil der von dem mindestens einen Frontscheinwerfer des Fahrzeugs abgestrahlten Lichtstrahlen auf eine orthogonal zur Fahrbahn angeordnete Reflektionsebene. Die Reflektionsebene ist vorzugsweise eine Wand. Die Ist-Position der horizontalen Hell-Dunkel-Grenze wird mit Hilfe des vertikalen Helligkeitsverlaufs in einem Bild mit einer Abbildung der Wand ermittelt. Die Entfernung zwischen dem Fahrzeug und der Reflektionsebene wird ermittelt. Die Höhe der horizontalen Hell-Dunkel-Grenze wird in der Reflektionsebene ermittelt. Die Entfernung zwischen dem Fahrzeug und der Reflektionsebene kann mit Hilfe der Entfernungsmessfunktion eines Stereokamerasystems, eines Radarentfernungsmesssystem, eines Lidarentfernungsmesssystem und/oder eines Ultraschallentfernungsmesssystem ermittelt werden. Der Neigungswinkel der horizontalen Hell-Dunkel-Grenze kann mit Hilfe der Entfernung zwischen Fahrzeug und der Reflektionsebene, der Höhe der horizontalen Hell-Dunkel-Grenze in der Reflektionsebene und der Höhe der Frontscheinwerfer über der Fahrbahn als Ist-Position der horizontalen Hell-Dunkel-Grenze ermittelt werden.

Das Verfahren und die Vorrichtung können besonders vorteilhaft bei Straßenfahrzeugen eingesetzt werden.

Die durch den unabhängigen Vorrichtungsanspruch spezifizierte Vorrichtung kann in gleicher Weise weitergebildet werden, wie das Verfahren nach Anspruch 1. Insbesondere kann die Vorrichtung mit den in den abhängigen Patentansprüchen angegebenen Merkmalen bzw. durch entsprechende Vorrichtungsmerkmale weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

### Es zeigen:

- Figur 1: eine schematische Seitenansicht einer Verkehrssituation mit zwei Fahrzeugen, wobei das hinter dem ersten Fahrzeug fahrende zweite Fahrzeug ein System zur veränderlichen Einstellung der horizontalen Hell-Dunkel-Grenze hat;
- Figur 2: eine schematische Seitenansicht des zweiten Fahrzeugs nach Figur 1 während eines Kalibriervorgangs; und
- Figur 3: eine Draufsicht auf das in Figur 2 dargestellte Fahrzeug während des Kalibriervorgangs.

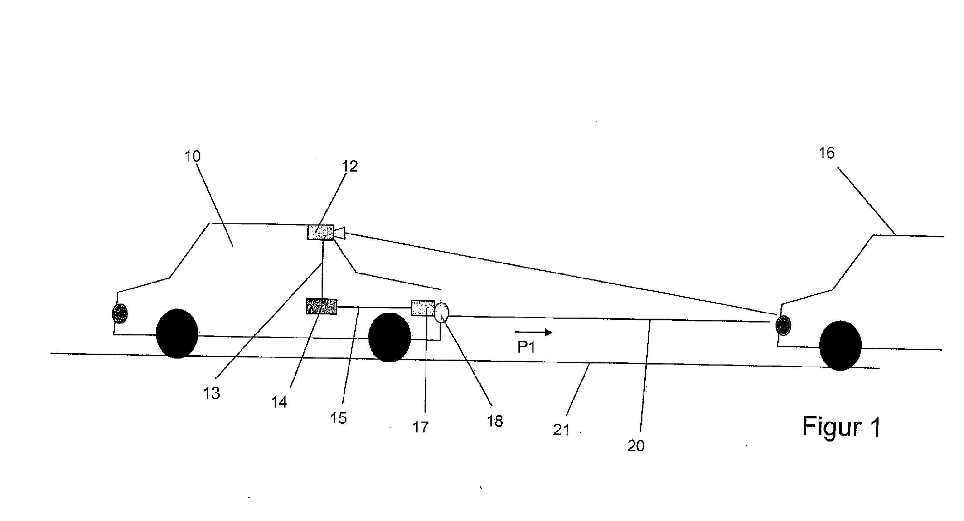

In Fig. 1 ist eine schematische Seitenansicht einer Verkehrssituation mit zwei Fahrzeugen dargestellt, wobei das hinter dem ersten Fahrzeug 16 fahrende zweite Fahrzeug 10 ein System zur veränderlichen Einstellung der horizontalen Hell-Dunkel-Grenze hat. Das zweite Fahrzeug 10 umfasst eine Frontkamera 12, die Bilddaten von Bildern mit Abbildungen eines Bereichs vor dem Fahrzeug 10 erzeugt. Die Kamera 12 ist über eine Datenleitung 13 mit einer Steuereinheit 14 verbunden. Die von der Kamera 12 erzeugten Bilddaten werden mit Hilfe eines durch die Steuereinheit 14 bereitgestellten Bildverarbeitungsverfahrens verarbeitet, wobei mit Hilfe des Bildverarbeitungsverfahrens relevante Objekte detektiert werden. Solche relevante Objekte sind insbesondere andere Fahrzeuge, deren Fahrzeugführer durch das vom Fahrzeug 10 ausgestrahlte Licht geblendet und somit gefährdet werden könnten. Im Ausführungsbeispiel ist als ein solches relevantes Objekt das auf der gleichen Fahrspur vorausfahrende erste Fahrzeug 16 dargestellt. Weitere relevante Objekte können beispielsweise entgegenkommende Fahrzeuge sein.

Die Steuereinheit 14 ist weiterhin über eine zweite Datenleitung 15 mit den Lichtsteuermodulen 17 verbunden, wobei den Frontscheinwerfern 18 des Fahrzeugs 10 im Ausführungsbeispiel nach Figur 1 jeweils ein Lichtsteuermodul 17 zugeordnet ist. Die Steuereinheit 14 gibt den Lichtsteuermodulen 17 eine gewünschte Lichtverteilung für den dem jeweiligen Lichtsteuermodul 17 zugeordneten Frontscheinwerfer 18 vor. Die Lichtsteuereinheiten 17 steuern den ihnen zugeordneten Frontscheinwerfer 18 oder die ihnen zugeordneten Frontscheinwerfer derart an, dass von ihm bzw. von ihnen abgestrahlte Licht der Frontscheinwerfer 18 die gewünschte vorgegebene Lichtverteilung erzeugt. Dazu aktivieren die Lichtsteuereinheiten 17 die erforderlichen Lichtquellen und/oder Aktoren zum Einstellen des Abstrahlwinkels des durch die Frontscheinwerfer 18 abgestrahlten Lichts. Dadurch wird die Lichtabgabe der Frontscheinwerfer 18 des Fahrzeugs 10 so gesteuert, dass der Fahrer des vorausfahrenden Fahrzeugs 16 nicht geblendet wird. Hierzu wird die horizontale Hell-Dunkel-Grenze 20 so weit in Richtung einer Fahrbahn 21 abgesenkt, dass der Fahrer des vorherfahrenden Fahrzeugs 16 nicht geblendet wird. Die horizontale Hell-Dunkel-Grenze ist im Ausführungsbeispiel schematisch durch die Linie 20 dargestellt und gibt die horizontale Grenze des vom Scheinwerfer 18 ausgestrahlten Lichtes an. Ein Anheben der horizontalen Hell-Dunkel-Grenze 20 bewirkt eine Vergrößerung der Reichweite des Abblendlichts. Ein Absenken der horizontalen Hell-Dunkel-Grenze 20 bewirkt eine Reduzierung der Rechweite des Abblendlichts.

Eine gewünschte Verschiebung der horizontalen Hell-Dunkel-Grenze 20 kann je nach Modell des Fahrzeugs 10 und je nach der verwendeten Technik der Frontscheinwerfer 18 unterschiedlich erfolgen. Insbesondere kann die horizontale Hell-Dunkel-Grenze 20 durch das Drehen einer vor einer Lichtquelle angeordneten Blendenwelle, durch das Absenken eines Schutters, durch die Aktivierung einer Leuchtweitenregulierung, durch eine Leistungsänderung einer oder mehrerer Lichtquelle und/oder das Zu- bzw. Abschalten einer oder mehrerer Lichtquellen geändert bzw. verschoben werden. Mit Hilfe der Blendenwelle können verschiedene Lichtfiguren erzeugt werden, die sowohl die unterschiedlichen Formen der Lichtverteilung als auch verschiedene horizontale Hell-Dunkel-Grenze 20 repräsentieren. Solche Lichtfiguren sind beispielsweise aus der Schrift EP 0935728 B1 bekannt. Dabei kann zur Erzeugung von Lichtfiguren insbesondere die VARIOX^{®} Technologie der Anmelderin verwendet werden.

Die Kamera 12 und die Fontscheinwerfer 18 müssen exakt auf ein nicht dargestelltes Fahrzeugkoordinatensystem und damit exakt relativ zueinander kalibriert sein, um die horizontale Hell-Dunkel-Grenze 20 korrekt einstellen zu können. Das Fahrzeugkoordinatensystem ist nach DIN 70 000 als ein dreidimensionales, rechtshändiges Koordinatensystem definiert, bei dem die x-Achse in Fahrtrichtung zeigt, die y-Achse in Fahrrichtung gesehen nach links zeigt und die z-Achse orthogonal auf den anderen beiden Achsen steht und nach oben gerichtet ist. Sind die Kamera 12 und die Frontscheinwerfer 18 nicht exakt aufeinander kalibriert, ist eine Blendung anderer Verkehrsteilnehmer, wie im Ausführungsbeispiel des Fahrers der vorherfahrenden Fahrzeugs 16, möglich. Dadurch kann dieser Fahrer behindert und Verkehrteilnehmer können gefährdet werden. Die Kamera 12 und die Frontscheinwerfer 18 werden in den vorliegenden Ausführungsbeispielen regelmäßig aufeinander kalibriert, um eine korrekte Positionierung einer vorgegebenen horizontalen Hell-Dunkel-Grenze 20 sicherzustellen.

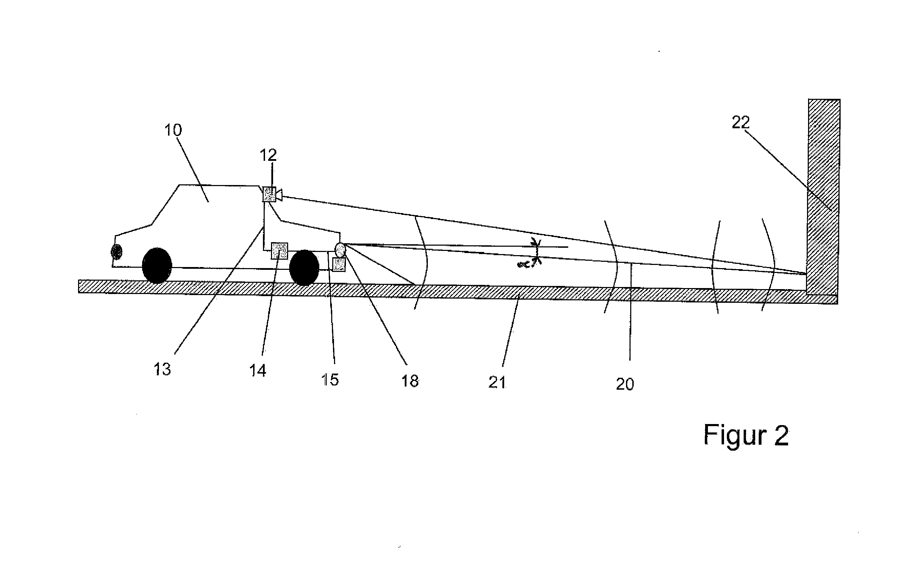

Figur 2 zeigt eine schematische Seitenansicht des Fahrzeugs 10 während eines Kalibriervorgangs zum Kalibrieren der horizontalen Hell-Dunkel-Grenze 20 auf das Fahrzeug- bzw. Kamerakoordinatensystem. Elemente mit gleichem Aufbau oder gleicher Funktion haben dieselben Bezugszeichen. Bei einem solchen Kalibriervorgang wird die horizontale Hell-Dunkel-Grenze 20 in dem von der Kamera 12 aufgenommen Bild mittels eines durch die Steuereinheit 14 bereitgestellten Bildverarbeitungsverfahrens detektiert und mit einer Sollposition verglichen. Liegen Abweichungen vor, werden Korrekturwerte ermittelt, die bei folgenden Scheinwerfereinstellungen berücksichtigt werden.

Zusätzlich kann eine Speicherung der Korrekturwerte als Korrekturdaten erfolgen. Die gespeicherten Korrekturdaten können dann in einer Fachwerkstatt ausgelesen werden. Bei dauerhafter Abweichung kann die Ausrichtung der Scheinwerfer durch eine entsprechende Justage der Scheinwerfer abhängig von den gespeicherten Korrekturdaten dauerhaft geändert werden.

Die Güte, mit der die horizontale Hell-Dunkel-Grenze 20 im Bild detektiert werden kann hängt von den Umgebungsbedingungen ab. Der Kalibriervorgang erfolgt vorzugsweise in einem speziellen Kalibriermodus. Eine optimale Kalibrierumgebung liegt vor, wenn sich das Fahrzeug 10, wie im Ausführungsbeispiel gezeigt, auf einer ebenen Fahrbahn 21 befindet und bei geringer Umgebungshelligkeit vor dem Fahrzeug 10 im Abstand von 5 bis 10 Metern eine Wand 22 orthogonal zur Fahrzeugachse des Fahrzeugs 10 angeordnet ist. Reflektiert die Umgebung ausreichend ist auch eine automatische Kalibrierung der Frontscheinwerfer 18 des Fahrzeugs 10 während der Fahrt des Fahrzeugs 10 möglich.

Der Abstand zwischen der Wand 22 und dem Fahrzeug kann mit einem im Fahrzeug 10 integrierten System aus vorteilhafterweise mehreren, zumindest jedoch einem Sensor erfolgen. Als Sensoren können Radar-, Lidar- oder eine Einparkhilfesysteme des Fahrzeugs 10 genutzt werden. Mittels der Kamera 12 und einem entsprechenden Bildverarbeitungsverfahrens können die Wand 22 und die horizontale Hell-Dunkel-Grenze 20 erkannt werden.

Die Steuereinheit 14 kann regelmäßig überprüfen, ob aktuell günstige Umgebungsbedingungen für einen solchen Kalibriervorgang vorliegen. Zum Überprüfen der Umgebungsbedingungen kann die Steuereinheit 14 zusätzlich Informationen eines Abstandssensors auswerten. Erkennt die Steuereinheit 14, dass aktuell günstige Umgebungsbedingungen für den Kalibriervorgang vorhanden sind, kann der Kalibriervorgang ohne Mitwirken des Fahrers und völlig unbemerkt von diesem erfolgen. Gelingt es der Steuereinheit über eine gewisse Zeit hinweg nicht solche günstigen Umgebungsbedingungen für den Kalibriervorgang zu detektieren, so kann die Steuereinheit 14 über eine geeignete Mensch-Maschine-Schnittstelle den Fahrer auffordern, einen Ort mit für den Kalibriervorgang günstigen Umgebungsbedingungen aufsuchen. Solche Orte können beispielsweise ein dunkles Parkhaus oder eine Garagenzufahrt sein. Günstige Umgebungsbedingungen für den Kalibriervorgang können beispielsweise auch beim Ein- bzw. Ausparken vor einer Wand auf einem Parkplatz vorliegen.

Befindet sich das Fahrzeug 10 in einer solchen günstigen Situation wird im vorliegenden Ausführungsbeispiel mittels eines Radars 24 der Abstand vom Fahrzeug 10 zur Wand 22 gemessen. Mit Hilfe mindestens eines durch die Kamera 12 aufgenommen Bildes des Bereiches vor dem Fahrzeug 10 wird an der Wand 22 der Abstand der horizontale Hell-Dunkel-Grenze 20 auf der Wand 22 zur Farbahn 21 bestimmt. Aus diesen Abständen und der bekannten Höhe der Scheinwerfer 18 über der Farbahn 21 wird der Winkel α zwischen der Horizontalen und der Hell-Dunkel-Grenze 20 berechnet und mit dem eingestellten Soll-Wert verglichen. Liegt eine Abweichung vor, werden Korrekturwerte ermittelt und als Korrekturdaten gespeichert.

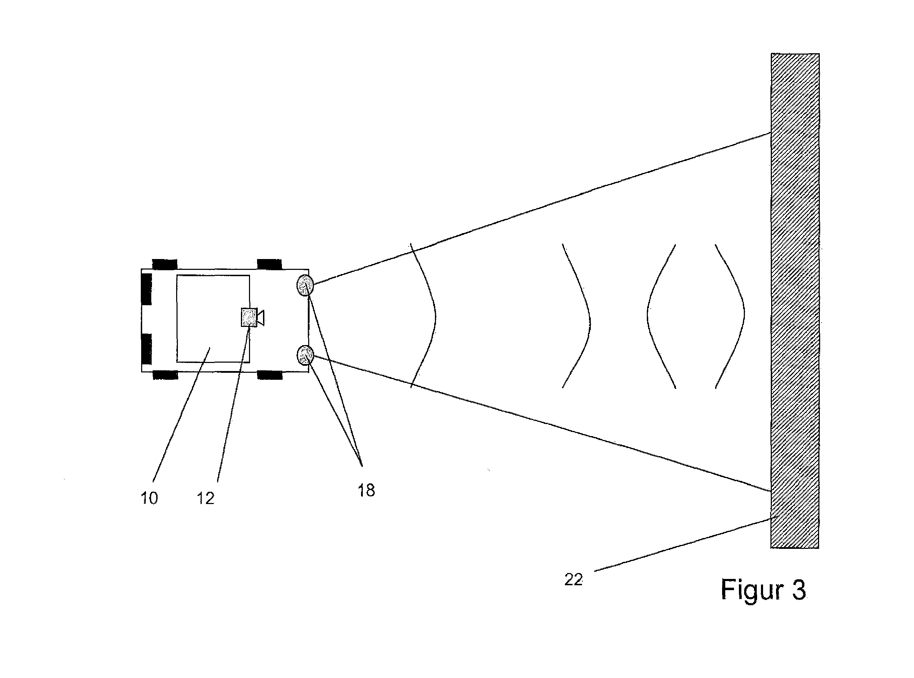

In Figur 3 ist eine Draufsicht des Fahrzeugs 10 während dieses Kalibriervorgangs nach Figur 2 dargestellt.

Das beschriebene Verfahren zur Kalibrierung der Frontscheinwerfer 18 eines Fahrzeugs 10 kann auch für jeden Fontscheinwerfer 18 separat durchgeführt werden. Hierzu wird vorzugsweise der jeweils andere Frontscheinwerfer temporär deaktiviert. Hierdurch wird erreicht, dass der Einfluss des temporär deaktivierten Frontscheinwerfers auf die Lichtverteilung unterdrückt wird und somit eine genauere Kalibrierung des aktivierten Frontscheinwerfers möglich ist. Ein solches separates Kalibrieren der Frontscheinwerfer 18 des Fahrzeugs 10 ist aus Sicherheitsgründen nur im Stillstand des Fahrzeugs 10 möglich.

## Patentansprüche

1. Verfahren zur Kalibrierung mindestens einer durch mindestens einen Frontscheinwerfer eines Fahrzeugs erzeugten horizontalen Hell-Dunkel-Grenze,
bei dem mindestens ein Bild mit einer Abbildung eines Bereichs vor dem Fahrzeug (10) erfasst wird,
bei der Verarbeitung der Bilddaten des erfassten Bildes mindestens eine Position mindestens einer durch mindestens einen Frontscheinwerfer (18) des Fahrzeugs (10) erzeugten horizontalen Hell-Dunkel-Grenze (20) als Ist-Position ermittelt wird,
und bei dem bei einer Abweichung der Ist-Position von einer voreingestellten Soll-Position mindestens ein Korrekturwert gebildet wird.

2. Verfahren nach Anspruch 1, **dadurch gekennzeichnet, dass** die durch eine Bilderfassungseinheit erzeugten Bilddaten eines Bildes eines Bereichs vor dem Fahrzeug durch eine Verarbeitungseinheit zum Ermitteln der Ist-Position der mindestens einen horizontalen Hell-Dunkel-Grenze (20) verarbeitet werden.

3. Verfahren nach einem der vorhergehenden Ansprüche, **dadurch gekennzeichnet, dass** der mindestens eine ermittelte Korrekturwert gespeichert wird.

4. Verfahren nach einem der vorhergehenden Ansprüche, **dadurch gekennzeichnet, dass** der vertikale Helligkeitsverlauf in einem mit Hilfe einer Bilderfassungseinheit vom Bereich vor dem Fahrzeug (10) erfassten Bildes ermittelt wird.

5. Verfahren nach Anspruch 4, **dadurch gekennzeichnet, dass** zum Ermitteln des Helligkeitsverlaufs nur Helligkeitswerte der Bilderfassungselemente berücksichtigt werden, die voreingestellten Detektionsspalten zugeordnet sind, und dass die mit Hilfe dieser Bilderfassungselemente ermittelte Helligkeitswerte zeilenweise summiert werden.

6. Verfahren nach Anspruch 5, **dadurch gekennzeichnet, dass** voreingestellte Detektionszeilen vorgesehen sind, und dass nur die Helligkeitswerte der Bilderfassungselemente zeilenweise summiert werden, die sowohl einer Detektionsspalte als auch einer Detektionszeile zugeordnet sind.

7. Verfahren nach einem der vorhergehenden Ansprüche, **dadurch gekennzeichnet, dass** eine Veränderung der horizontalen Hell-Dunkel-Grenze (20) mit Hilfe einer Veränderung der Leuchtweitenregulierung der Frontscheinwerfer (18) des Fahrzeugs (10) durchgeführt wird.

8. Verfahren nach einem der vorhergehenden Ansprüche, **dadurch gekennzeichnet, dass** eine Verstellung der horizontalen Hell-Dunkel-Grenze (20) durch Zu- und/oder Abschalten einer oder mehrerer Lichtquellen mindestens eines Frontscheinwerfers (18) des Fahrzeugs (10) durchgeführt wird.

9. Verfahren nach einem der vorhergehenden Ansprüche, **dadurch gekennzeichnet, dass** der Abstrahlwinkel der durch den Frontscheinwerfer (18) des Fahrzeugs (10) abgestrahlten Lichtstrahlen, die die horizontale Hell-Dunkel-Grenze (20) erzeugen, bestimmt wird.

10. Verfahren nach Anspruch 9, **dadurch gekennzeichnet, dass** die Entfernung zwischen dem Fahrzeug (10) und der auf die Fahrbahn vor dem Fahrzeug projizierten horizontalen Hell-Dunkel-Grenze (20) ermittelt wird.

11. Verfahren nach Anspruch 10, **dadurch gekennzeichnet, dass** die Entfernung mit Hilfe eines Stereokamerasystems ermittelt wird.

12. Verfahren nach Anspruch 9, **dadurch gekennzeichnet, dass** zumindest ein Teil der von dem Frontscheinwerfer (18) des Fahrzeugs (10) abgestrahlten Lichtstrahlen auf eine orthogonal zur Fahrbahn angeordneten Reflektionsebene, vorzugsweise auf eine Wand (22), auftreffen und die Ist-Position der horizontalen Hell-Dunkel-Grenze (20) mit Hilfe des Helligkeitsverlaufs der Reflektionsebene (22) ermittelt wird, wobei die Entfernung zwischen dem Fahrzeug (10) und der Reflektionsebene (22) ermittelt wird, und wobei die Höhe der horizontalen Hell-Dunkel-Grenze in der Reflektionsebene (22) ermittelt wird.

13. Verfahren nach Anspruch 12, **dadurch gekennzeichnet, dass** der Neigungswinkel (α) der horizontalen Hell-Dunkel-Grenze (20) mit Hilfe der Entfernung zwischen Fahrzeug (10) und Reflektionsebene (22), der Höhe der horizontalen Hell-Dunkel-Grenze (20) in der Reflektionsebene (22) und der Höhe der Frontscheinwerfer (18) über der Fahrbahn (21) als Ist-Position der horizontalen Hell-Dunkel-Grenze (20) ermittelt wird.

14. Verfahren nach Anspruch 13, **dadurch gekennzeichnet, dass** die Entfernung zwischen dem Fahrzeug (10) und der Reflektionsebene (22) mit Hilfe der Entfernungsmessfunktion eines Kamerasystems, eines Radarentfernungsmesssystem, eines Lidarentfernungsmesssystem und/oder eines Ultraschallentfernungsmesssystem ermittelt werden.

15. Verfahren nach einem der vorhergehenden Ansprüche, **dadurch gekennzeichnet, dass** regelmäßig überprüft wird, ob günstige Umgebungsbedingungen für den Kalibriervorgang vorliegen.

16. Verfahren nach einem der vorhergehenden Ansprüche, **dadurch gekennzeichnet, dass** der automatische Kalibriervorgang während der Fahrt durchgeführt wird.

17. Verfahren nach einem der vorhergehenden Ansprüche, **dadurch gekennzeichnet, dass** ein Fahrer des Fahrzeugs (10) durch eine geeignete Mensch-Maschine-Schnittstelle dazu aufgefordert wird, einen Ort mit günstigen Umgebungsbedingungen für den Kalibriervorgang aufzusuchen, sofern innerhalb eines voreingestellten Zeitraums keine Situation mit günstigen Umgebungsbedingungen ermitteln worden ist.

18. Vorrichtung zur Kalibrierung mindestens einer durch mindestens einen Frontscheinwerfer eines Fahrzeugs erzeugten horizontalen Hell-Dunkel-Grenze,
mit einer Bilderfassungseinheit, die Bilddaten mindestens eines Bildes einer Abbildung eines Bereichs vor dem Fahrzeug (10) erzeugt, und
mit einer Verarbeitungseinheit, die die mit Hilfe der Bilderfassungseinheit erzeugten Bilddaten verarbeitet,
wobei die Verarbeitungseinheit mindestens eine Position mindestens einer durch mindestens einen Frontscheinwerfer (18) des Fahrzeugs (10) erzeugten horizontalen Hell-Dunkel-Grenze (20) als Ist-Position ermittelt,
und wobei die Verarbeitungseinheit bei einer Abweichung der Ist-Position von einer voreingestellten Soll-Position ein Korrekturwert bildet.
